# DEMANDE DE BREVET EUROPEEN

(11) **EP 4 597 775 A1**
(43) Date de publication de la demande: **06.08.2025**
(21) Numéro de dépôt: 25154624.8
(22) Date de dépôt: 29.01.2025
(51) Int. Cl.: H02J 3/14

(54) **PROCEDE ET DISPOSITIF DE GESTION DE LA PUISSANCE ELECTRIQUE CONSOMMEE DANS UN BATIMENT**

(30) Priorité: 01.02.2024 FR 2401013
(71) Demandeur: DELTA DORE, 35270 Bonnemain (FR)
(72) Inventeur: LE TUTOUR, Jean, 35270 BONNEMAIN (FR)
(74) Mandataire: Cabinet Le Guen Maillet

(57) **Abrégé**

La présente invention concerne un procédé et un dispositif de gestion de la puissance électrique consommée par des dispositifs d'un bâtiment comportant un dispositif de consommation intelligent et un gestionnaire d'énergie, la puissance électrique étant au moins fournie par un réseau de fourniture d'énergie électrique par l'intermédiaire d'un compteur qui mesure la puissance électrique délivrée par le réseau de fourniture en énergie électrique au bâtiment et, lorsque la puissance électrique est supérieure à celle prévue pour le bâtiment, provoque une disjonction. Selon l'invention, le gestionnaire d'énergie :
- mesure la puissance électrique fournie par le compteur,
- mesure (E301) la puissance électrique consommée par le dispositif de consommation intelligent,
- détermine (E307) la puissance électrique restante avant une disjonction en prenant en compte une première valeur prédéterminée de puissance électrique et la puissance électrique consommée par le dispositif de consommation intelligent,
- sélectionne (E308) au moins un dispositif de consommation.

## Description

### DOMAINE TECHNIQUE

La présente invention concerne un procédé et dispositif de gestion de la puissance électrique consommée dans un bâtiment.

### ETAT DE LA TECHNIQUE ANTERIEURE

Classiquement, la puissance électrique consommée dans un bâtiment provient en grande partie d'un réseau de fourniture d'énergie électrique. L'énergie électrique du réseau de fourniture en énergie électrique est délivrée au bâtiment par l'intermédiaire d'un compteur qui mesure la puissance délivrée par le réseau de fourniture en énergie électrique au bâtiment et, lorsque la puissance est supérieure à celle prévue pour le bâtiment, provoque une interruption de la fourniture de l'énergie électrique au bâtiment. Cette interruption est appelée disjonction.

De nouveau dispositifs consommateurs en énergie électrique apparaissent dans les bâtiments. Ces dispositifs sont appelés par la suite dispositifs de consommation intelligents.

Les dispositifs de consommation intelligents sont aptes à augmenter ou réduire leur puissance électrique consommée en fonction de la puissance électrique disponible avant qu'une disjonction n'apparaisse.

Ces dispositifs de consommation intelligents sont par exemple des bornes de recharge de véhicules électriques ou des systèmes de climatisation ou des pompes à chaleur.

Il existe des gestionnaires d'énergie pour le chauffage électrique ou le chauffage eau chaude (chaudière, pompe à chaleur, poêle à granulés...). Les gestionnaires d'énergie électrique regroupent plusieurs fonctions pour optimiser la consommation en énergie d'un habitat. Les gestionnaires d'énergie assurent une température constante et confortable selon les heures de la journée et les zones du logement grâce à des fonctions de programmation et de délestage. Les gestionnaires d'énergie se révèlent être des appareils complets et efficaces pour piloter les installations de chauffage ou de climatisation tout en faisant des économies d'énergie.

Les gestionnaires d'énergie commandent ainsi le fonctionnement de divers appareils électriques en s'assurant que la puissance électrique totale consommée soit inférieure à la puissance électrique prévue pour le bâtiment et prenne en compte les différentes tarifications horaires de manière à réduire le coût financier de la facturation effectuée par l'opérateur du réseau de fourniture en énergie électrique.

Lorsqu'un bâtiment comporte un dispositif de consommation intelligent et un gestionnaire d'énergie, des problèmes apparaissent.

Par exemple, si le dispositif de consommation intelligent est informé qu'une puissance électrique totale consommée par le bâtiment est inférieure à la puissance électrique prévue pour le bâtiment, celui-ci peut augmenter la puissance électrique délivrée au véhicule. Le gestionnaire d'énergie, voyant que la puissance totale consommée par le bâtiment est quasiment égale à la puissance électrique prévue pour le bâtiment, ne peut déclencher le fonctionnement de dispositifs consommateurs en énergie électrique tels que des moyens de chauffage de bâtiment ou un ballon d'eau chaude ou de climatisation ou une pompe à chaleur.

Cette situation pourrait être résolue en établissant une liaison de communication entre le dispositif de consommation intelligent et le gestionnaire d'énergie, mais les protocoles de communication utilisés par les dispositifs de consommation intelligents sont variés voire propriétaires. Cette solution ne peut donc être retenue pour une implémentation à grande échelle.

Ainsi, l'occupant du bâtiment doit faire un choix entre recharger son véhicule électrique avec la puissance électrique du bâtiment et ne pas disposer d'un chauffage adéquat du bâtiment ou recharger son véhicule électrique avec des bornes de recharge autres que celle du bâtiment.

Cette situation n'est pas optimale pour la satisfaction et le bien-être de l'occupant du bâtiment.

### EXPOSE DE L'INVENTION

L'invention vise à garantir le confort d'un occupant d'un bâtiment comportant un dispositif de consommation intelligent et un gestionnaire d'énergie ainsi qu'une bonne répartition de la puissance électrique consommée.

Selon un premier aspect de l'invention, l'invention concerne un procédé de gestion de la puissance électrique consommée par des dispositifs d'un bâtiment comportant un dispositif de consommation intelligent et un gestionnaire d'énergie, la puissance électrique étant au moins fournie par un réseau de fourniture d'énergie électrique par l'intermédiaire d'un compteur qui mesure la puissance électrique délivrée par le réseau de fourniture en énergie électrique au bâtiment et, lorsque la puissance électrique est supérieure à celle prévue pour le bâtiment, provoque une interruption de la fourniture de l'énergie électrique au bâtiment, le dispositif de consommation intelligent étant apte à réduire sa puissance électrique consommée ou à augmenter sa puissance électrique consommée en fonction de la puissance électrique disponible avant qu'une interruption de la fourniture de l'énergie électrique au bâtiment n'apparaisse, le gestionnaire d'énergie étant apte à commander des dispositifs de consommation différents du dispositif de consommation intelligent ; caractérisé en ce que le procédé comporte les étapes, exécutées par le gestionnaire d'énergie, de :
- mesure de la puissance électrique fournie par le compteur,
- mesure de la puissance électrique consommée par le dispositif de consommation intelligent,
- vérification si une priorité est associée au dispositif de consommation intelligent et dans la négative :
- détermination de la puissance électrique restante avant une interruption de la fourniture de l'énergie électrique au bâtiment lorsque la puissance électrique fournie par le compteur est supérieure à celle prévue pour le bâtiment en prenant en compte une première valeur prédéterminée de puissance électrique et la puissance électrique consommée par le dispositif de consommation intelligent,
- sélection, à partir de la puissance électrique restante déterminée, d'au moins un dispositif de consommation parmi les dispositifs de consommation différents du dispositif de consommation intelligent,
- activation du au moins un dispositif de consommation sélectionné.

Corrélativement, l'invention concerne un gestionnaire d'énergie gérant la puissance électrique consommée par des dispositifs d'un bâtiment, le bâtiment comportant en outre un dispositif de consommation intelligent, la puissance électrique étant au moins fournie par un réseau de fourniture d'énergie électrique par l'intermédiaire d'un compteur qui mesure la puissance électrique délivrée par le réseau de fourniture en énergie électrique au bâtiment et, lorsque la puissance est supérieure à celle prévue pour le bâtiment, provoque une interruption de la fourniture de l'énergie électrique au bâtiment, le dispositif de consommation intelligent étant apte à réduire sa puissance électrique consommée ou à augmenter sa puissance électrique consommée en fonction de la puissance électrique disponible avant qu'une interruption de la fourniture de l'énergie électrique au bâtiment n'apparaisse, le gestionnaire d'énergie étant apte à commander des dispositifs de consommation différents du dispositif de consommation intelligent ; caractérisé en ce que le gestionnaire d'énergie comporte :
- des moyens de mesure de la puissance électrique fournie par le compteur,
- des moyens de mesure de la puissance électrique consommée par le dispositif de consommation intelligent,
- des moyens de vérification si une priorité est associée au dispositif de consommation intelligent et dans la négative, activation :
- des moyens de détermination de la puissance électrique restante avant une interruption de la fourniture de l'énergie électrique au bâtiment lorsque la puissance électrique fournie par le compteur est supérieure à celle prévue pour le bâtiment en prenant en compte une première valeur prédéterminée de puissance électrique et la puissance électrique consommée par le dispositif de consommation intelligent,
- des moyens de sélection, à partir de la puissance électrique restante déterminée, d'au moins un dispositif de consommation parmi les dispositifs de consommation différents du dispositif de consommation intelligent,
- des moyens d'activation du au moins un dispositif de consommation sélectionné.

Ainsi, la présente invention permet de prioriser les usages d'énergie urgents par rapport au dispositif de consommation intelligent, comme par exemple le chauffage, la climatisation, ou l'eau chaude sanitaire, ou un appareil électroménager.

Selon un autre aspect de l'invention, la sélection du ou de chaque dispositif de consommation est effectuée à partir d'un critère de priorité associé à chaque dispositif de consommation.

Ainsi, la présente invention permet de gérer au mieux la consommation électrique du bâtiment en fonction de l'intérêt de l'utilisateur, en termes de coût et de confort, et de la non-suspension de sa fourniture en énergie électrique par disjonction.

Selon un autre aspect de l'invention, le procédé comporte en outre les étapes de :
- comparaison de la puissance électrique fournie par le compteur à la puissance électrique prévue pour le bâtiment,
- sélection d'au moins un dispositif de consommation parmi les dispositifs de consommation différents du dispositif de consommation intelligent si la puissance électrique consommée dans le bâtiment est supérieure à la puissance prévue pour le bâtiment,
- désactivation du au moins un dispositif de consommation sélectionné.

Ainsi, la présente invention permet de libérer de la puissance pour le dispositif de consommation intelligent s'il y a une forte demande d'énergie pour celui-ci.

Selon un autre aspect de l'invention, le dispositif de consommation intelligent est une borne de recharge d'un véhicule électrique.

Ainsi, la présente invention permet d'éviter le cas fréquent où toute la puissance électrique est consommée par la charge du véhicule électrique, interdisant les autres usages dans le bâtiment.

Selon un autre aspect de l'invention, le procédé comporte en outre l'étape de détermination si le véhicule est en fin de charge ou n'est pas en charge et la détermination de la puissance électrique restante avant une interruption de la fourniture de l'énergie électrique au bâtiment lorsque la puissance électrique fournie par le compteur est supérieure à celle prévue pour le bâtiment ne prend pas en compte la puissance consommée par le dispositif de consommation intelligent et la première valeur prédéterminée d'énergie et prend en compte une seconde valeur prédéterminée.

Ainsi, la présente invention permet d'éviter les dépassements de la puissance électrique consommée quand le dispositif de consommation intelligent n'est pas en fonctionnement et d'utiliser toute la puissance disponible avant disjonction.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] représente un bâtiment dans lequel la présente invention est implémentée ;
[Fig. 2] représente un schéma bloc d'un gestionnaire d'énergie selon la présente invention ;
[Fig. 3] représente un exemple d'algorithme exécuté par le gestionnaire d'énergie selon la présente invention.

### EXPOSE DETAILLE DE MODES DE REALISATION

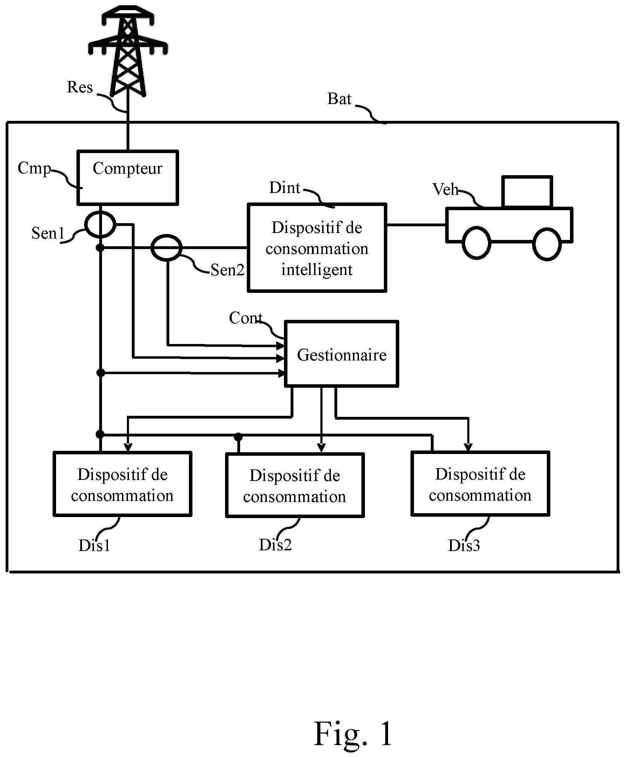

La Fig. 1 représente un bâtiment dans lequel la présente invention est implémentée.

Le bâtiment Bat comporte un compteur Cmp, un dispositif de consommation intelligent Dint, un gestionnaire d'énergie Cont et une pluralité de dispositifs de consommation Dis1, Dis2 et Dis3.

Le compteur Cmp mesure la puissance électrique délivrée par un réseau Res de fourniture en énergie électrique au bâtiment et, lorsque la puissance électrique mesurée est supérieure à celle prévue pour le bâtiment, provoque une disjonction. La disjonction n'est pas immédiate, celle-ci est effectuée au bout de quelques secondes ou dizaines de secondes après une mesure de surconsommation.

Le dispositif de consommation intelligent Dint est par exemple une borne de recharge d'un véhicule électrique Veh ou système de climatisation ou une pompe à chaleur.

Le gestionnaire d'énergie Cont commande le fonctionnement des dispositifs de consommation Dis1, Dis2 et Dis3 en s'assurant que la puissance électrique délivrée par le compteur soit inférieure à la puissance électrique prévue pour le bâtiment et prend en compte les différentes tarifications horaires de manière à réduire le coût financier de la facturation effectuée par l'opérateur du réseau de fourniture en énergie électrique.

Au gestionnaire d'énergie Cont, sont associés des moyens d'obtention de la puissance électrique délivrée par le compteur ainsi que des moyens d'obtention de la puissance électrique consommée par le dispositif de consommation intelligent Dint.

Les moyens d'obtention de la puissance électrique délivrée par le compteur Cmp sont par exemple un capteur de courant Sen1.

Les moyens d'obtention de la puissance électrique consommée par le dispositif de consommation intelligent Dint sont par exemple un capteur de courant Sen2.

La valeur de la tension électrique dans le bâtiment étant connue, une mesure de puissance électrique est équivalente à une mesure de courant.

Il est à remarquer ici que d'autres sources de fourniture en énergie électrique non représentées en Fig. 1, telles que des panneaux photovoltaïques, des éoliennes ou tout système de fourniture d'énergie électrique renouvelable peuvent fournir de l'énergie électrique au bâtiment. L'énergie électrique délivrée par ces sources d'énergie électrique renouvelables n'est pas mesurée par le compteur électrique Cmp.

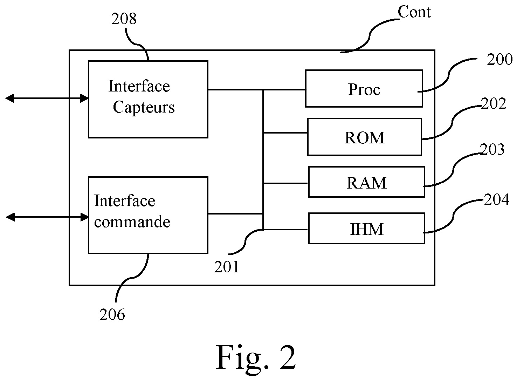

La Fig. 2 représente un schéma bloc d'un gestionnaire d'énergie selon la présente invention.

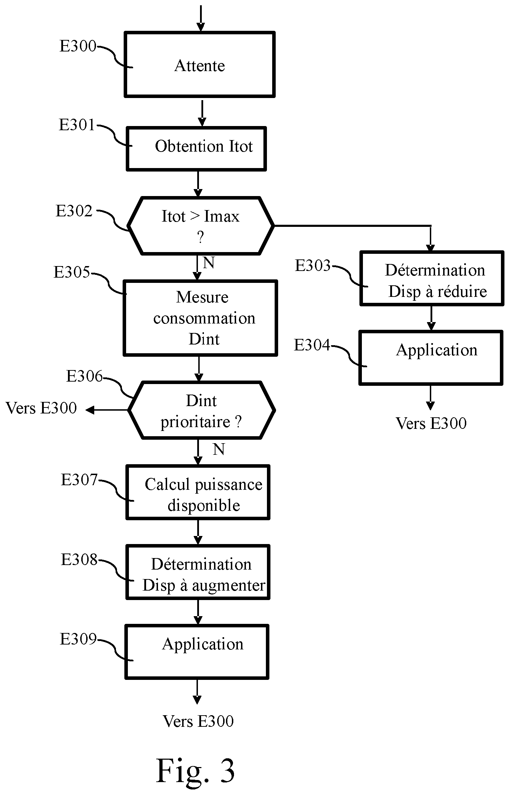

Le gestionnaire d'énergie Cont est adapté à effectuer, à partir d'un ou plusieurs modules logiciels, les étapes de l'algorithme tel que décrit en référence à la Fig. 3.

Le gestionnaire d'énergie Cont comporte un bus de communication 201 auquel sont reliés un processeur 200, une mémoire non volatile 202, une mémoire vive 203, éventuellement une interface homme machine IHM 204, une interface de commande 206 permettant la commande des dispositifs de consommation Dis1, Dis2 et Dis3, et une interface capteurs 208 auxquels sont reliés les capteurs Sen1 et Sen2.

L'interface homme machine 204 permet à l'occupant d'indiquer si un dispositif de consommation intelligent Dint est présent dans le bâtiment et d'associer des niveaux de priorité à au moins une partie des dispositifs de consommation Dis1, Dis2 et Dis3 et au dispositif de consommation intelligent Dint.

La mémoire non volatile 202 mémorise le ou les modules logiciel(s) mettant en oeuvre l'invention, ainsi que les données permettant de mettre en oeuvre l'algorithme tel que décrit en référence à la Fig. 3.

De manière plus générale, les programmes selon la présente invention sont mémorisés dans un moyen de stockage. Ce moyen de stockage est lisible par le microprocesseur 200. Ce moyen de stockage est intégré ou non au gestionnaire d'énergie Cont, et peut être amovible.

Lors de la mise sous tension du gestionnaire d'énergie Cont, le ou les modules logiciel(s) selon la présente invention est ou sont transféré(s) dans la mémoire vive 203 qui contient alors le code exécutable selon la présente invention ainsi que les données nécessaires à la mise en oeuvre de l'invention.

Ainsi, tout ou partie de l'algorithme et étapes décrits ici peut être implémenté sous forme logicielle par exécution d'un ensemble d'instructions par une machine programmable, telle qu'un DSP (« Digital Signal Processor » en anglais) ou un microcontrôleur ou un processeur. Tout ou partie de l'algorithme et étapes décrits ici peut aussi être implémenté sous forme matérielle par une machine ou un composant (« chip » en anglais), tel qu'un FPGA (« Field-Programmable Gate Array » en anglais) ou un ASIC (« Application-Specific Integrated Circuit » en anglais). Ainsi, le gestionnaire d'énergie Cont comporte de la circuiterie électronique adaptée et configurée pour implémenter les comportements, algorithme et étapes décrits ici.

La Fig. 3 représente un exemple d'algorithme exécuté par le gestionnaire d'énergie selon la présente invention.

A l'étape E300, le gestionnaire d'énergie Cont entre dans une boucle d'attente d'une durée prédéterminée. La durée prédéterminée est par exemple définie en fonction de l'installation électrique du bâtiment Bat. La durée prédéterminée est par exemple comprise entre 0,1 seconde et 60 secondes.

A l'étape suivante E301, le gestionnaire d'énergie Cont commande l'obtention d'une mesure de la puissance électrique fournie par le compteur électrique Cmp. La mesure de la puissance électrique fournie par le compteur électrique Cmp Itot est par exemple effectuée par l'intermédiaire du capteur de courant Sens1 ou obtenue par l'intermédiaire d'un lien de communication du compteur Cmp.

A l'étape E302, le gestionnaire d'énergie Cont vérifie si la puissance électrique fournie par le compteur électrique Cmp Itot est supérieure à la puissance Imax prévue pour le bâtiment par l'opérateur du réseau de fourniture en énergie électrique.

Dans l'affirmative, le gestionnaire d'énergie Cont passe à l'étape E303 et dans la négative le gestionnaire d'énergie Cont passe à l'étape E305.

A l'étape E303, le gestionnaire d'énergie Cont sélectionne au moins un dispositif de consommation parmi les dispositifs de consommation différents du dispositif de consommation intelligent.

La sélection du ou de chaque dispositif de consommation est par exemple effectuée à partir d'un critère de priorité associé à chaque dispositif de consommation.

Le critère de priorité est par exemple défini par l'occupant du bâtiment à partir de l'interface homme machine IHM 204.

A l'étape E304, le gestionnaire d'énergie Cont désactive le ou chaque dispositif de consommation sélectionné et retourne à l'étape E300.

A l'étape E305, le gestionnaire d'énergie Cont commande l'obtention d'une mesure de la puissance consommée par le dispositif de consommation intelligent Dint. La mesure de la puissance consommée Ich dans le bâtiment est par exemple effectuée par l'intermédiaire du capteur de courant Sens2.

A l'étape E306, le gestionnaire d'énergie Cont vérifie si le dispositif de consommation intelligent Dint a un critère de priorité le plus élevé parmi les dispositifs de consommation. Dans l'affirmative, le gestionnaire d'énergie Cont retourne à l'étape E300 et dans la négative le gestionnaire d'énergie Cont passe à l'étape E307.

A l'étape E307, le gestionnaire d'énergie Cont détermine la puissance électrique restante avant une interruption de la fourniture de l'énergie électrique au bâtiment lorsque la puissance électrique fournie par le compteur Cmp est supérieure à celle prévue pour le bâtiment en prenant en compte une première valeur de puissance prédéterminée et la puissance électrique consommée par le dispositif de consommation intelligent.

Le gestionnaire d'énergie Cont détermine la puissance restante selon la formule suivante : Idispo= Imax-Tot+Ich-Ichmin.

Où Ichmin est la première valeur de puissance prédéterminée.

Icchmin est par exemple égale à 6 ou 8 Ampères ou est définie par l'occupant du bâtiment. En variante, le gestionnaire d'énergie Cont détermine si le véhicule Veh est en fin de charge ou n'est pas en charge.

Le véhicule Veh n'est pas en charge lorsque la puissance du dispositif de consommation intelligent est égale à une seconde valeur prédéterminée. La seconde valeur prédéterminée est égale à la puissance consommée par le dispositif de consommation intelligent sans que le véhicule Veh soit connecté à celle-ci. La seconde valeur prédéterminée est par exemple déterminée par l'occupant du bâtiment à l'aide de l'interface homme machine pour indiquer que le véhicule Veh n'est pas en charge. Le gestionnaire d'énergie Cont obtient alors une mesure de la puissance consommée par le dispositif de consommation intelligent est assigne cette mesure comme seconde valeur prédéterminée.

Le véhicule Veh est en fin de charge lorsque la puissance consommée par le dispositif de consommation intelligent décroît dans le temps pour arriver à une valeur proche de la somme de la seconde valeur prédéterminée.

Selon cette variante, la détermination de la puissance électrique restante ne prend pas en compte la puissance du dispositif de consommation intelligent et la première valeur prédéterminée d'énergie et prend en compte la seconde valeur prédéterminée.

A l'étape E308, le gestionnaire d'énergie Cont sélectionne, à partir de la puissance restante déterminée, au moins un dispositif de consommation parmi les dispositifs de consommation différents du dispositif de consommation intelligent.

La sélection est effectuée en comparant la puissance restante avec les différentes énergies consommées par les dispositifs de consommation Dis1, Dis2 et Dis3 lorsque ceux-ci sont activés.

Par exemple, la sélection est effectuée en prenant en compte un critère de priorité associé à chaque dispositif de consommation Dis1, Dis2 et Dis3.

A l'étape E309, le gestionnaire d'énergie Cont commande l'activation du au moins un dispositif de consommation sélectionné.

Cette étape effectuée, le gestionnaire d'énergie Cont retourne à l'étape E300.

Bien entendu, la présente invention n'est nullement limitée aux modes de réalisation décrits ici, mais englobe, bien au contraire, toute variante à la portée de l'homme du métier.

## Revendications

1. Procédé de gestion de la puissance électrique consommée par des dispositifs d'un bâtiment comportant un dispositif de consommation intelligent et un gestionnaire d'énergie, la puissance électrique étant au moins fournie par un réseau de fourniture d'énergie électrique par l'intermédiaire d'un compteur qui mesure la puissance électrique délivré par le réseau de fourniture en énergie électrique au bâtiment et, lorsque la puissance électrique est supérieure à celle prévue pour le bâtiment, provoque une interruption de la fourniture de l'énergie électrique au bâtiment, le dispositif de consommation intelligent étant apte à réduire sa puissance électrique consommée ou à augmenter sa puissance électrique consommée en fonction de la puissance électrique disponible avant qu'une interruption de la fourniture de l'énergie électrique au bâtiment n'apparaisse, le gestionnaire d'énergie étant apte à commander des dispositifs de consommation différents du dispositif de consommation intelligent ; **caractérisé en ce que** le procédé comporte les étapes, exécutées par le gestionnaire d'énergie, de :
- mesure de la puissance électrique fournie par le compteur,
- mesure (E301) de la puissance électrique consommée par le dispositif de consommation intelligent,
- vérification (E306) si une priorité est associée au dispositif de consommation intelligent et, dans la négative :
- détermination (E307) de la puissance électrique restante avant une interruption de la fourniture de l'énergie électrique au bâtiment lorsque la puissance électrique fournie par le compteur est supérieure à celle prévue pour le bâtiment en prenant en compte une première valeur prédéterminée de puissance électrique et la puissance électrique consommée par le dispositif de consommation intelligent,
- sélection, (E308) à partir de la puissance électrique restante déterminée, d'au moins un dispositif de consommation parmi les dispositifs de consommation différents du dispositif de consommation intelligent,
- activation (E309) du au moins un dispositif de consommation sélectionné.

2. Procédé selon la revendication 1, **caractérisé en ce que** la sélection du ou de chaque dispositif de consommation est effectuée à partir d'un critère de priorité associé à chaque dispositif de consommation.

3. Procédé selon la revendication 1 ou 2, **caractérisé en ce que** le procédé comporte en outre les étapes de :
- comparaison de la puissance électrique fournie par le compteur à la puissance électrique prévue pour le bâtiment,
- sélection d'au moins un dispositif de consommation parmi les dispositifs de consommation différents du dispositif de consommation intelligent si la puissance électrique consommée dans le bâtiment est supérieure à la puissance prévue pour le bâtiment,
- désactivation du au moins un dispositif de consommation sélectionné.

4. Procédé selon l'une quelconque des revendications 1 à 3, **caractérisé en ce que** le dispositif de consommation intelligent est une borne de recharge d'un véhicule électrique.

5. Procédé selon la revendication 4, **caractérisé en ce que** le procédé comporte en outre l'étape de détermination si le véhicule est en fin de charge ou n'est pas en charge et **en ce que** la détermination de la puissance électrique restante avant une interruption de la fourniture de l'énergie électrique au bâtiment lorsque la puissance électrique fournie par le compteur est supérieure à celle prévue pour le bâtiment ne prend pas en compte la puissance consommée par le dispositif de consommation intelligent et la première valeur prédéterminée d'énergie et prend en compte une seconde valeur prédéterminée.

6. Gestionnaire d'énergie gérant la puissance électrique consommée par des dispositifs d'un bâtiment, le bâtiment comportant en outre un dispositif de consommation intelligent, la puissance électrique étant au moins fournie par un réseau de fourniture d'énergie électrique par l'intermédiaire d'un compteur qui mesure la puissance électrique délivrée par le réseau de fourniture en énergie électrique au bâtiment et, lorsque la puissance est supérieure à celle prévue pour le bâtiment, provoque une interruption de la fourniture de l'énergie électrique au bâtiment, le dispositif de consommation intelligent étant apte à réduire sa puissance électrique consommée ou à augmenter sa puissance électrique consommée en fonction de la puissance électrique disponible avant qu'une interruption de la fourniture de l'énergie électrique au bâtiment n'apparaisse, le gestionnaire d'énergie étant apte à commander des dispositifs de consommation différents du dispositif de consommation intelligent ; **caractérisé en ce que** le gestionnaire d'énergie comporte :
- des moyens de mesure de la puissance électrique fournie par le compteur,
- des moyens de mesure de la puissance électrique consommée par le dispositif de consommation intelligent,
- des moyens de vérification si une priorité est associée au dispositif de consommation intelligent et dans la négative, activation :
- des moyens de détermination de la puissance électrique restante avant une interruption de la fourniture de l'énergie électrique au bâtiment lorsque la puissance électrique fournie par le compteur est supérieure à celle prévue pour le bâtiment en prenant en compte une première valeur prédéterminée de puissance électrique et la puissance électrique consommée par le dispositif de consommation intelligent,
- des moyens de sélection, à partir de la puissance électrique restante déterminée, d'au moins un dispositif de consommation parmi les dispositifs de consommation différents du dispositif de consommation intelligent,
- des moyens d'activation du au moins un dispositif de consommation sélectionné.
